# EUROPEAN PATENT SPECIFICATION

(11) **EP 2 235 086 B1**
(45) Date of publication and mention of the grant of the patent: **08.02.2012**
(21) Application number: 08862494.5
(22) Date of filing: 12.12.2008
(51) Int. Cl.: C08G 18/42, C08G 18/66, C08G 18/32

(54) **LOW MELTING POLYURETHANE ELASTOMERS**
POLYURETHANELASTOMER mit niedriger Schmelztemperatur
ELASTOMÈRES DE POLYURÉTHANE À BAS POINT DE FUSION

(30) Priority: 14.12.2007 US 13737
(43) Date of publication of application: 06.10.2010
(73) Proprietor: Lubrizol Advanced Materials, Inc., Cleveland, OH 44141-3247 (US)
(72) Inventor: MELTZER, Donald A., Akron Ohio 44333 (US)
(74) Representative: von Kreisler Selting Werner
(86) International application number: PCT/US2008/086557
(87) International publication number: WO 2009/079360

(56) References cited:
- US-A- 5 821 180
- US-A- 6 022 939
- US-B1- 6 221 999

## Description

The present invention relates generally to polyurethane elastomer compositions; and more preferably to thermoplastic polyurethane elastomer compositions. In one embodiment, the polyurethane elastomer compositions of the present invention haye low melting points while still behaving in an elastomeric manner. In another embodiment the polyurethane elastomer compositions of the present invention are prepared from the reaction of a polyester polyol component, a methylene diphenyl diisocyanate (MDI) component, and a linear diol chain extender having either 5 carbons or 7 or more carbons between the OH groups of the diol.

Thermoplastic polyurethanes elastomers are usually produced by reacting a polyol compound with a diisocyanate and a chain extender and have linear polymeric molecular structures having hard segment portions and soft segment portions. Thermoplastic polyurethanes elastomers formed in accordance with this general recipe generally fall into one of two main classes; (1) TPUs that exhibit good elastomeric properties and a melting point of greater than 135°C (determined by differential scanning calorimetry (DSC) at a 10°C/minute heating rate); or (2) TPU's that behave more like a plastic than an elastomer and have a melting point of less than 135°C.

United States Patent No. 5,990,258 relates to cast thermoplastic polyurethanes elastomer (TPUs) with high resilience and high clarity for use in roller skate wheels. As disclosed therein, the TPUs of United States Patent No. 5,990,258 are formed from a combination of a polyether or polycaprolactones polyol, a methylene diphenyl diisocyanate. (MDI), and at least one diol chain extender having the formula OH-(CH₂)ₓ-OH where x is an integer from 5 to about 16. Additionally, the MDI component of this patent is disclosed to contain 4,4'-MDI, about 0 to about 60 weight percent 2,4'-MDI, and less than about 6 weight percent 2,2'-MDI.

United States Patent No. 6,221,999 relates to cast thermoplastic polyurethanes elastomers (TPUs) with high resilience and high clarity. As disclosed therein, the TPUs of United States Patent No. 6,221,999 are formed from a combination of a polyether polyol; a methylene diphenyl diisocyanate (MDI), and at least one diol chain extender having the formula OH-(CH₂)ₓ-OH where x is an integer from 5 to about 16. Additionally, the MDI component of this patent is disclosed to contain at least 70 weight percent 4,4'-MDI. This is because, as is disclosed in United States Patent No. 6,221,999, an increase in the content of either the 2,4'-MDI or 2,2'-MDI isomers leads to an undesirable decrease in the resiliency of the TPU elastomer so produced.
US 5,821,180 discloses a laminate comprising a thermoplastic polyurethane film obtained via melt extrusion obtained from a polymeric diol such as an aliphatic polyester polyol, a polyisocyanate preferably 4,4'-MDI and a chain extender mixture of 1,4-butanedlol and 1,9-nonanediol in a weight ratio of 80/20.
US 6,022,939 discloses a thermoplastic polyurethane elastomer obtained by reacting A) diisocyanates, B) polyhydroxy compounds and/or polyamines, with C) as chain extenders mixtures of C1) benzene substituted with at least two hydroxyalkyl, hydroxyalkoxy, aminoalkyl and/or aminoalkoxy groups and C2) an alkanediol with 4 to 44 C atoms. The reaction is further characterized in that the molar ratio C1 to C2 is 60 to 40 to 95 to 5 and in that the equivalent ratio of NCO groups to the sum of the NCO-reactive groups is about 0.9 to 1.20.

The present invention relates generally to polyurethane elastomer compositions, and more preferably to thermoplastic polyurethane elastomer compositions. In one embodiment, the polyurethane elastomer compositions of the present invention have low melting points while still behaving in an elastomeric manner. In another embodiment, the polyurethane elastomer compositions of the present invention are prepared from the reaction of a single polyester polyol component, a methylene diphehyl diisocyanate (MDI) component, and a linear diol chain extender having either 5 carbons or 7 or more carbons between the OH groups of the diol.
In particular, the present invention relates to a thermoplastic polyurethane elastomer composition comprising
the reaction product of:
(a) a single polyester polyol selected from polyadipates, polyazelates, polybutyrates, and polycarbonates wherein the number average molecular weight of the polyester polyol is in the range of from 2,000 to 15,000;
(b) at least one polyisocyanate; and
(c) at least one diol chain extender, where the at least one chain extender consists of one or more compounds according to the following formula:

   OH-(CH₂)ₓ-OH
where x is either equal to 5 or is an integer in the range of 7 to 30, and wherein the at least one polyisocyanate comprises at least 95 weight percent of diphenylmethane-4,4'-diisocyanate.
In a further embodiment the present invention relates to a thermoplastic polyurethane film formed from the thermoplastic polyurethane elastomer composition of the present invention.
In another embodiment the invention relates to an extruded thermoplastic polyurethane elastomeric film formed from the thermoplastic polyurethane elastomeric composition of the invention. Preferred embodiments of the invention are apparent from the dependent claims.

The present invention relates generally to polyurethane elastomer compositions; and more preferably to thermoplastic polyurethane elastomer compositions. In one embodiment, the polyurethane elastomer compositions of the present invention have low melting points while still behaving in an elastomeric manner. In another embodiment, the polyurethane elastomer compositions of the present invention are prepared from the reaction of a single polyester polyol component, a methylene diphenyl diisocyanate (MDI) component, and a linear diol chain extender having either 5 carbons or 7 or more carbons between the OH goups of the diol.

In one embodiment, the thermoplastic polyurethane elastomer compositions of the present invention can be utilized to prepare films and/or other materials. Such TPU films and/or other materials can be formed by a variety of techniques including, but not limited to, extrusion from pellets. It should be noted that the present invention is not limited to just firms formed from TPU elastomer compositions disclosed herein.

In another embodiment, the thermoplastic polyurethane elastomer compositions of the present invention can be utilized to prepare films that are suitable for use in the garment industry for use in, for example, stichless Or seamless garments.

In one embodiment, the polyurethane elastomer compositions described herein can be prepared by numerous methods known in the art. In one embodiment a one-shot polymerization process is utilized where all of the reactants are combined simultaneously or substantially simultaneously and reacted. In one instance, such a one-shot process can be performed in an extruder. In another embodment, the TPUs of the present invention can be polymerized in a variety of step-wise addition processes (e.g., a random melt polymerization process as is known in the art).

The term "polyurethane elastomer compositions" when utilized throughout the specification can refer to a composition containing the necessary reagents utilized to form a polyurethane elastomer, or a composition subsequent to reaction of polyurethane elastomer forming reagents by some process or mechanism. As is noted above, the thermoplastic polyurethane elastomer polymers of the present invention comprise the reaction product of a polyester polyol component, a methylene diphenyl diisocyanate (MDI) component, and a linear diol chain extender having either 5 carbons or 7 or more carbon between the OH groups of the diol.

In one embodiment, the polyurethane elastomer compositions in accordance with the present invention have a kofler melting temperature of a resin of less than about 120°C. In another embodiment, the polyurethane elastomer compositions in accordance with the present invention have a 200% tensile set at room temperature (i.e., 20°C to 23.5°C) of less than 20% when tested in accordance with ASTM D412, or even less than 15%. In still another embodiment, the polyurethane elastomer compositions in accordance with the present invention have a tensile set after 3 cycles to 100% elongation is less than 10%, or even less than 5%.

As is known to those of skill in the art, the method by which a thermoplastic polyurethane elastomer composition is produced impacts the physical and chemical properties of such a thermoplastic polyurethane elastomer composition. Additionally, the method by which a thermoplastic polyurethane elastomer product is formed impacts the physical and chemical properties of such a thermoplastic polyurethane elastomer product. Given this, identical polyurethane elastomer compositions that are produced via two different methods (*e.g.*, solution versus bulk polymerization) into similar products would possess different physical and chemical properties.

### Polyols:

As noted above, the thermoplastic polyurethane elastomers of the present invention are the reaction product of a polyester polyol component. By "polyester polyol component" it is meant that the polyester polyol component is formed from the combination of one or more polyester polyols having a number average molecular weight (Mₙ) of at least 1,000, at least 1,500, or even at least 2,000. Here, as well as elsewhere in the specification and claims, individual range limits can be combined to form non-disclosed ranges. According to the invention the polyester polyols are selected from polyadipates, polyazelates, polybutyrates, and polycarbonates.

The overall number average molecular weight of the one polyester polyol utilized in connection with the present invention is in the range of from 2,000 to 5,000, or from 2,000 to 12,000, or from 2,000 to 10,000, or even from 2,000 to 5,000.

By "overall number average molecular wight" it is meant that the numerical average of the Polyester polyol component of the present invention is calculated based on the different molecular weights and proportions of the one or more polyester polyols contained therein. As such, polyester polyols having number average molecular weight outside the above ranges could be utilized in the present invention so long as the overall number average molecular weight of a mixed polyester polyol component falls within one or more of the above range.

According to the invention the polyester polyol portion of the present invention is selected from a suitable single polyester polyol.

Suitable polyester polyols for use in the present invention are commercially available from Inolex such as Lexorez^{®} 1600-55, 1640-55 or 1100-35; or from Polyurethane Specialties such as Millester^{®} 11-55, 23 or 9-55.

### Polyisocyanates:

The polyurethane elastomer polymers of the present invention are formed from a polyurethane elastomer composition containing an isocyanate component. In order to form relatively long linear polyurethane elastomer chains, di-functional or even polyfunctional isocyanates are utilized. In one embodiment, one or more diisocyanates are utilized. Suitable polyisocyanates are commercially available from companies such as, but not limited to, Bayer Corporation of Pittsburgh, Pa., The BASF Corporation of: Parsippany, N.J., The Dow Chemical Company of Midland, Mich., and Huntsman Chemical of Utah. The polyisocyanates of the present invention generally have a formula R(NCO)ₙ, where n is 2. R can be an aromatic, a cycloaliphatic, an aliphatic, or combinations thereof having from 2 to 20 carbon atoms. Examples of polyisocyanates include, but are not limited to, diphenylmethane-4,4'-diisocyanate (MDI), toluene-2,4-isocyanate (TDI), toluene-2,6-diisocyanate (TDI), methylene bis(4-cyclohexylisocyanate (H₁₂MDI), 3-isocyanatomethyl-3,5,5-trimethyl-cyclohexyl isocyanate (IPDI), 1,6-hexane diisocyanate (HDI), naphthalene-1,5-diisocyanate (NDI), 1,3- and 1,4-phenylendiisocyanate, triphenylmethane-4,4',4"-triisocyanate, polyphenylpolymethylenepolyisocyanate (PMDI), m-xylene diisocyanate (XDI), 1,4-cyclohexyl diisocyanate (CHDI), isophorone diisocyanate, isomers, dimers, trimers and mixtures or combinations of two or more thereof

In another embodiment, the polyurethane elastomer polymers of the present invention are formed from a polyurethane elastomer compositions containing a diphenylmethane diisocyanate (MDI) component. As is known to those of skill in the art, MDI is an isomeric mixture composed of 4.4'-MDI and other isomers such as, for Example, the 2,4'-MDI and 2,2'-MDI isomers. Given this, in one embodiment, the polyisocyanate used in conjunction with the present invention comprises MDI where such MDI comprises primarily the 4,4'-MDI isomer, By primarily it is meant that at least 95 weight percent of such an MDI component is formed by 4,4'-MDI, or at least 97 weight percent 4,4'-MDI, or even at least 98 weight percent 4,4'-MDI, or even at least 99 weight percent 4,4'-MDI.

### Chain Extenders:

Chain extenders are employed in the production of the polyurethane elastomer compositions of the present invention, In one embodiment, the chain extenders utilized in connection with the present invention are selected from those chain extenders having a long linear hydrocarbon chain terminated by two OH groups. According to the invention the chain extenders utilized in connection with the present invention are selected from those diol chain extenders having the following general formula:

OH-(CH₂)ₓ-OH

where x is equal to 5 or is an integer in the range of 7 to 30; or x is in the range of 8 to 25, or x is in the range of 9 to 20, or x is in the range of 12 to 15, or x is even in the range of 9 to 12. In one embodiment, x is equal to 5, 9 or 12.

In another embodiment, the chain extender of the present invention is 1,12-dodecanediol (C₁₂-diol). In still another embodiment, two or more of the above chain extenders can be combined to form a mixed chain extender component for use in conjunction with the present invention. In still another embodiment, a second chain extender other than those chain extenders discussed above can be mixed with one or more of the above chain extenders to form a mixed chain extender component for use in conjunction with the present invention.

The molar amount or ratio of the total hydroxyl groups of the one or more chain extenders utilized to the total hydroxyl groups of the polyester polyol component set forth above is generally from 0.1 to 5.0, or from 0.2 to 4.0, or even from 0.4 to 2.5.

### Polymerization Process and Additional Additives:

As is noted above, the thermoplastic polyurethane (TPUs) elastomers of the present invention are formed from the reaction of (1) a polyester polyol component; (2) one or more polyisocyanates; and (3) one or more chain extenders. Numerous methods of forming polyurethane are known including the multi-step process of reacting the polyester polyol component with the polyisocyanate component and then chain extending the same.

The thermoplastic polyurethane elastomers of the present invention are, in one embodiment, produced by the "one-shot" polymerization process as known in the art, wherein the polyester polyol component, polyisocyanate component, and the chain extenders are added together, mixed, and polymerized. Desirably, the polyester polyol component and the chain extender are added in one stream and the polyisocyanate is added in a second stream. In one instance, the one-shot polymerization process is performed in an extruder. The monomers are supplied for the polymerization reaction and the reaction is performed at a temperature in the range of 60°C to 220°C, or from 100°C to 210°C, or even from 120°C to 200°C. Suitable mixing times to enable the various components to react and form the thermoplastic polyurethanes of the present invention are, in one embodiment, from 1 minute to 10 minutes, or from 2 minutes to 7 minutes, or even from 3. minutes to 5 minutes.

The molar ratio of polyisocyanate functional groups to total hydroxyl groups of the mixed polyol component and chain extenders is, in one embodiment, from 0.90 to 1.10, or even from 0.95 to 1.05.

The weight average molecular weight of the polymerized thermoplastic polyurethane elastomers of the present invention generally range from 10,000 to 500,000, or from 25,000 to 400,000, or even from 50,000 to 300,000,

In addition to the above-identified components, the TPU elastomer compositions of the present invention can also optionally contain various additives, pigments, dyes, fillets, lubricants, UV absorbers, waxes, antioxidants, thickening agents and the like, which can be utilized in conventional amounts as known to those of skill in art or in the literature. The additives utilized generally impart desired properties to the thermoplastic polyurethane elastomers. Fillers include talc, silicates, clays, calcium carbonate, and the like.

If it is desired that the polyurethane elastomer compositions of the present invention have a color or hue, any conventional pigment of dye can be utilized in conventional amounts. Hence, any pigment known to those of skill in the art, or in the literature, can be utilized as for example titanium dioxide; iron oxide, carbon black, and the like, as well as various dyes provided that thee do hot interfere with the various urethane reactions.

The thermoplastic polyurethane (TPU) elastomers of the present invention can be extruded into any desired end product or form, or can be cooled and pelletized or granulated for storage or bulk shipping The extrudate can be immediately processed in some other manner after extrusion to give la desired final end use product.

### Examples:

tables 1 and 2 illustrate various polyurethane elastomer formulations that are Comparative Examples 1-6. Tables 3, 4, 6 and 7 show Examples 1 to 6 and 10 to 15 according to the present invention.

The thermoplastic polyurethane elastomer polymers illustrated below are prepares by a random melt polymerization method. In this method, the polyester polyol component and the chain extender (*e.g*., 1,12-dodecanediol, (C₁₂-diol)) are mixed together at a temperature of about 120°C and supplied to a reactor fitted with a mechanical stirrer. Also, supplied to The reactor for addition to the polyester polyol component/chain extender combination is a pre-heated polyisocyanate (*e.g*., a suitable MDI component at 120°C). The resulting TPUs are tested for T_{g} (glass transition temperature), and Tₘ (melting temperature) and T_{c} (crystallization temperature) by DSC. The materials are then compression molded into a 127µm (5 mil) film for Kofler Tₘ testing and a 762 µm (30 mil) film for tensile set testing. The results of these various tests are reported in Tables 1 through 8.

**Table 1**

| Example | Comparative 1 | Comparative 2 | Comparative 3 |
|---|---|---|---|
| Polyester Polyol (g)¹ | 188.80 | 188.80 | 188.80 |
| 1,4-Butanediol (1,4-BDO) (g) | 11.20 | 11.20 | 11.20 |
| MDI (g) | 49.07 | 49.45 | 49.82. |
| Blend Temperature (°C) | 120 | 120 | 120 |
| MDI Temperature (°C) | 120 | 120 | 120 |
| Reaction Time (minutes) | 3 | 3 | 3 |
| Polyester Polyol Mₙ | 2500 | 2500 | 2500 |
| 1,4-BDO M_{w} | 90 | 96 | 90 |
| MDI M_{w} | 250.4 | 250.4 | 250.4 |
| CE/Polyol Mole Ratio | 1.648 | 1.648 | 1.648 |
| Stoichiometry (%) | 98.00 | 98.00 | 98.00 |
| Tₘ by DSC (°C) | 145 | 145 | 133 |
| T_{g} by DSC (°C) | -44 | -37 | -37 |
| T_{c} by DSC (°C) | 48 | 40 | 38 |
| M_{w} by GPC | 145153 | 366119 | 263097 |
| Mₙ by GPC | 63396 | 98278 | 76133 |
| Kofler Tₘ (°C) | 131 | 134 | 126 |
| 200% Tensile Set (%) | 6 | 5 | 4 |

| | | | |
|---|---|---|---|
| 1 1,6-Hexanediol-1,4-Butanediol Adipate | | | |

**Table 2**

| Example | Comparative 4 | Comparative 5 | Comparative 6 |
|---|---|---|---|
| Polyester Polyol (g)² | 190.00 | 190.00 | 190.00 |
| 1,4-Butanediol (1,4-BDO) (g) | 10.00 | 10.00 | 10.00 |
| MDI (g) | 49.55 | 50.32 | 51.09 |
| Blend Temperature (°C) | 120 | 120 | 120 |
| MDI Temperature (°C) | 120 | 120 | 120 |
| Reaction Time (Minutes) | 3 | 3 | 3 |
| Polyester Polyol Mₙ | 2000 | 2000 | 2000 |
| 1,4-BDO M_{w} | 90 | 90 | 90 |
| MDI M_{w} | 250.4 | 250.4 | 250.4 |
| CE/Polyol Mole Ratio | 1.170 | 1.170 | 1.170 |
| Stoichiometry (%) | 96.00 | 97.50 | 99.00 |
| Tₘ by DSC (°C) | 129 | 131 | 131 |
| T_{g} by DSC (°C) | -30 | -26 | -26 |
| T_{c} by DSC (°C) | None | None | None |
| M_{w} by GPC | 63616 | 76991 | 104235 |
| Mₙ by GPC | 32356 | 35941 | 42811 |
| Kofler Tₘ (°C) | 99 | 100 | 103 |
| 200% Tensile Set (%) | 9 | 8 | 8 |

| | | | |
|---|---|---|---|
| 2 Ethylene Glycol 1,4-Butanediol Adipate | | | |

**Table 3**

| Example | 1 | 2 | 3 |
|---|---|---|---|
| Polyester Polyol(g)¹ | 176.50 | 176.50 | 176.50 |
| 1,12-Dodecanediol (1,12-Diol) (g) | 23.50 | 23.50 | 23.50 |
| MDI(g) | 45.88 | 46.23 | 46.58 |
| Blend temperature (°C) | 120 | 120 | 120 |
| MDI Temperature (°C) | 120 | 120 | 120 |
| Reaction Time (Minutes) | 3 | 3 | 3 |
| Polyester Polyol Mₙ | 2500 | 2500 | 2500 |
| 1,12-Diol M_{w} | 202 | 202 | 202 |
| MDI M_{w} | 250.4 | 250.4 | 250.4 |
| CE/Polyol Mole Ratio | 1.648 | 1.648 | 1.648 |
| Stoichiometry (%) | 98.00 | 98.75 | 99.50 |
| Tₘ by DSC (°C) | 124 | 123 | 122 |
| T_{g} by DSC (°C) | -45 | -42 | -44 |
| T_{c} by DSC (°C) | 32 | 28 | 27 |
| M_{w} by GPC | 170615 | 265876 | 477897 |
| Mₙ by GPC | 68574 | 64274 | 132595 |
| Kofler Tₘ (°C) | 113 | 11.5 | 116 |
| 200% Tensile Set (%) | 14 | 10 | 11 |

| | | | |
|---|---|---|---|
| 1 1,6-Hexanediol- 1,4-Butanediol Adipate | | | |

**Table 4**

| Example | 4 | 5 | 6 |
|---|---|---|---|
| Polyester Polyol (g)¹ | 181.79 | 181.79 | 181.79 |
| 1,12-Dodecanediol (1,12-Diol) (g) | 18.21 | 18.21 | 18.21 |
| MDI (g) | 39.97 | 40.27 | 40.58 |
| Blend Temperature (°C) | 120 | 120 | 120 |
| MDI Temperature (°C) | 126 | 120 | 120 |
| Reaction Time (Minutes) | 3 | 3 | 3 |
| Polyester Polyol Mₙ | 2500 | 2500 | 2500 |
| 1,12-Diol M_{w} | 202 | 202 | 202 |
| MDI M_{w} | 250.4 | 250.4 | 250.4 |
| CE/Polyol Mole Ratio | 1.240 | 1.240 | 1.240 |
| Stoichiometry (%) | 98.00 | 98.75 | 99.50 |
| Tₘ by DSC (°C) | 117 | 116 | 115 |
| T_{g} by DSC (°C) | -43 | -45 | -41 |
| T_{c} by DSC (°C) | 12 | 9 | 10 |
| M_{w} by GPC | 223462 | 363169 | 435600 |
| Mₙ by GPC | 76047 | 115612 | 94168 |
| Kofler Tₘ (°C) | 109 | 110 | 110 |
| 200% Tensile Set (%) | 11 | 11 | 8 |

| | | | |
|---|---|---|---|
| 1 1.6-Hexanediol- 1,4-Butanediol Adipate. | | | |

**Table 5 (not according to the invention)**

| Example | 7 | 8 | 9 |
|---|---|---|---|
| Polyestex Polyol 1 (g)³ | 84.00 | 84.00 | 84.00 |
| Polyester Polyol 2 (g)⁴ | 84.00 | 84.00 | 84.00 |
| 1,12-Dodecanediol (1,12-Diol) (g) | 32.00 | 32.00 | 32.00 |
| MDI (g) | 67.69 | 69.12 | 70.54 |
| Blend Temperature (°C) | 120 | 120 | 120 |
| MDI Temperature (°C) | 120 | 120 | 120 |
| Reaction Time (Minutes) | 3 | 3 | 3 |
| Polyester Polyol 1 Mₙ | 2156.4 | 2156.4 | 2156.4 |
| Polyester Polyol 2 Mₙ | 963.4 | 963.4 | 963.4 |
| 1,12-Diol M_{w} | 202 | 202 | 3202 |
| MDI M_{w} | 250.4 | 250.4 | 250.4 |
| CE/Polyol Mole Ratio | 1.256 | 1.256 | 1.256 |
| Stoichiometry (%) | 95.00 | 97.00 | 99.00 |
| Tₘ by DSC (°C) | 125 | 125 | 125 |
| T_{g} by DSC (°C) | -27 | -13 | -12 |
| T_{c} by DSC (°C) | 34 | 31 | None |
| M_{w} by GPC | 53839 | 80650 | 1639961 |
| Mₙ by GPC | 25960 | 38361 | 62741 |
| Kofler Tₘ (°C) | 97 | 99 | 103 |
| 200% Tensile Set (%) | 33 | 27 | 21 |

| | | | |
|---|---|---|---|
| 3 1,6 Hexanediol - Neopentyl diol Adipate from Inolex as Lexorez^{®} 1400-56 4 1,6 Hexanediol - Neopentyl diol Adipate from Inolex as Lexorez^{®} X1400-120 | | | |

**Table 6**

| Example | 10 | 11 | 12 |
|---|---|---|---|
| Polyester polyol (g)³ | 178.00 | 178.00 | 178.00 |
| 1,12-Dodecanediol(1,12-Diol) (g) | 22.00 | 22.00 | 22.00 |
| MDI (g) | 47.08 | 47.07 | 49.06 |
| Blend Temperature (°C) | 120 | 120 | 120 |
| MDI Temperature (°C) | 120 | 120 | 120 |
| Reaction Time (Minutes) | 3 | 3 | 3 |
| Polyester Polyol Mₙ | 2000 | 2000 | 2000 |
| 1,12-Diol M_{w} | 202 | 202 | 202 |
| MDI M_{w} | 250.4 | 250.4 | 250.4 |
| CE/Polyol Mole Ratio | 1.224 | 1.224 | 1:224 |
| Stoichiometry (%) | 95.00 | 97.00 | 99.00 |
| Tₘ by DSC (°C) | 121 | 121 | 120 |
| T_{g} by DSC (°C) | -30 | -29 | -28 |
| T_{c} by DSC (°C) | 20 | None | None |
| M_{w} by GPC | 99648 | 134606 | 185899 |
| Mₙ by GPC | 41959 | 50625 | 61427 |
| Kofler Tₘ (°C) | 92 | 92 | 95 |
| 200% Tensile Set (%) | 15 | 13 | 11 |

| | | | |
|---|---|---|---|
| 3 1,6-Hexanediol - Neopentyl diol Adipate from Inolex as Lexorez^{®} 1400-56 | | | |

**Table 7**

| Example | 13 | 14 | 15 |
|---|---|---|---|
| polyester Polyol (g)¹ | 181.79 | 181.79 | 181.79 |
| 1,12-Dodecanediol (1,12-Diol) (g) | 18.21 | 18.21 | 18.21 |
| MDI (g) | 38.74 | 39.15 | 39.56 |
| Blend Temperature (°C) | 120 | 120 | 120 |
| MDI Temperature (°C) | 120 | 120 | 120 |
| reaction Time (Minutes) | 3 | 3 | 3 |
| Polyester Polyol Mₙ | 2500 | 2500 | 2500 |
| 1,12-Diol M_{w} | 202 | 202 | 202 |
| MDI M_{w} | 250.4 | 250.4 | 250.4 |
| CE/Polyol Mole Ratio | 1.240 | 1.240 | 1.240 |
| Stoichiometry (%) | 95.00 | 96.00 | 97.00 |
| Tₘ by DSC (°C) | 118 | 119 | 118 |
| T_{g} by DSC (°C) | -45 | -42 | -43 |
| T_{c} by DSC (°C) | 21 | 17 | 15 |
| M_{w} by GPC | 112522 | 145889 | 210393 |
| Mₙ by GPC | 51097 | 62785 | 80152 |
| Kofler Tₘ (°C) | 95 | 98 | 102 |
| 200% Tensile Set (%) | 13 | 11 | 10 |

| | | | |
|---|---|---|---|
| 1 1,6-Hexanediol-1,4-Butanediol Adipate | | | |

**Table 8 (not according to the invention)**

| Example | 16 | 17 | 18 |
|---|---|---|---|
| Polyester Polyol (g)⁵ | 168.00 | 168.00 | 168.00 |
| 1,12-Dodecanediol (1,12-Diol) (g) | 32.00 | 32.00 | 32.90 |
| MDI (g) | 70.23 | 70.77 | 71.31 |
| Blend Temperature (°C) | 120 | 120 | 120 |
| MDI Temperature (°C) | 120 | 120 | 120 |
| Reaction Time (Minutes) | 1 | 3 | 3 |
| polyester Polyol Mₙ | 1300 | 1300 | 1300 |
| 1,12-Diol M_{w} | 202 | 202 | 202 |
| MDI M_{w} | 250.4 | 250.4 | 250.4 |
| GE/Polyol Mole Ratio | 1.226 | 1..226 | 1.226 |
| Stoichiometry (%) | 97.50 | 99.25 | 99.00 |
| Tₘ by DSC (°C) | 126 | 131 | 127 |
| T_{g} by DSC (°C) | -33 | -29 | -26 |
| T_{c} by DSC (°C) | 41 | 38 | 36 |
| M_{w} by GPC | 136017 | 179452 | 135693 |
| Mₙ by GPC | 55102 | 64235 | 53741 |
| KoflerTₘ (°C) | 101 | 102 | 102 |
| 200% Tensile Set (%) | 25 | 24 | 21 |

| | | | |
|---|---|---|---|
| 5 1,4-Butanediol Adipate | | | |

As discussed above, the thermoplastic polyurethane elastomer compositions of the present invention can be used to form any suitable article. Exemplary articles include pellets and films.

## Claims

1. A thermoplastic polyurethane elastomer composition comprising the reaction product of:
(a) a single polyester polyol selected from polyadipates, polyazelates, polybutyrates, and polycarbonates wherein the number average molecular weight of the polyester polyol is in the range of from 2,000 to 15,000;
(b) at least one polyisocyanate; and
(c) at least one diol chain extender, where the at least one chain extender consists of one or more compounds according to the following formula:
OH-(CH₂)ₓ-OH
where x is either equal to 5 or is an integer in the range of 7 to 30, and wherein the at least one polyisocyanate comprises at least 95 weight percent of diphenylmethane-4,4'-diisocyanate.

2. The thermoplastic polyurethane elastomer composition of claim 1 where x is an integer in the range of 8 to 25.

3. The thermoplastic polyurethane elastomer composition of claim 1 or 2, wherein the number average molecular weight of the polyester polyol is in the range of from 2,000 to 10,000, or 2,500 to 10,000.

4. The thermoplastic polyurethane elastomer composition of claim 1 or 2, wherein x is an integer in the range of 8 to 25, or 9 to 20, or 9 to 12.

5. The thermoplastic polyurethane elastomer composition of claim 1 or 2, wherein the at least one polyisocyanate comprises at least 97 weight percent of diphenylmethane-4,4'-diisocyanate.

6. A thermoplastic polyurethane film formed from the thermoplastic polyurethane elastomer composition as defined in any one of claims 1 to 5.

7. An extruded thermoplastic polyurethane elastomeric film formed from the thermoplastic polyurethane elastomer composition as defined in any one of claims 1 to 5.

## Patentansprüche

1. Thermoplastische Polyurethanelastomer-Zusammensetzung, umfassend:
das Reaktionsprodukt von:
(a) einem einzelnen Polyesterpolyol, der aus Polyadipaten, Polyazelaten, Polybutyraten und Polycarbonaten ausgewählt ist, wobei das Zahlenmittel des Molekulargewichts des Polyesterpolyols im Bereich von 2000 bis 15000 liegt;
(b) wenigstens einem Polyisocyanat; und
(c) wenigstens einem Diol-Kettenverlängerer, wobei der wenigstens eine Kettenverlängerer aus einer oder mehreren Verbindungen gemäß der folgenden Formel besteht:
OH-(CH₂)ₓ-OH,
wobei x entweder gleich 5 ist oder eine ganze Zahl im Bereich von 7 bis 30 ist und wobei das wenigstens eine Polyisocyanat wenigstens 95 Gew.-% Diphenylmethan-4,4'-diisocyanat umfasst.

2. Thermoplastische Polyurethanelastomer-Zusammensetzung gemäß Anspruch 1, wobei x eine ganze Zahl im Bereich von 8 bis 25 ist.

3. Thermoplastische Polyurethanelastomer-Zusammensetzung gemäß Anspruch 1 oder 2, wobei das Zahlenmittel des Molekulargewichts des Polyesterpolyols im Bereich von 2000 bis 10000 oder 2500 bis 10000 liegt.

4. Thermoplastische Polyurethanelastomer-Zusammensetzung gemäß Anspruch 1 oder 2, wobei x eine ganze Zahl im Bereich von 8 bis 25 oder 9 bis 20 oder 9 bis 12 ist.

5. Thermoplastische Polyurethanelastomer-Zusammensetzung gemäß Anspruch 1 oder 2, wobei das wenigstens eine Polyisocyanat wenigstens 97 Gew.-% Diphenylmethan-4,4'-diisocyanat umfasst.

6. Thermoplastische Polyurethanfolie, gebildet aus der thermoplastischen Polyurethanelastomer-Zusammensetzung gemäß einem der Ansprüche 1 bis 5.

7. Extrudierte thermoplastische Polyurethanelastomerfolie, gebildet aus der thermoplastischen Polyurethanelastomer-Zusammensetzung gemäß einem der Ansprüche 1 bis 5.

## Revendications

1. Composition élastomère de polyuréthane thermoplastique comprenant le produit réactionnel de :
(a) un seul polyol de polyester choisi parmi les polyadipates, les polyazélates, les polybutyrates et les polycarbonates, le poids moléculaire moyen du polyol de polyester étant de l'ordre de 2.000 à 15.000 ;
(b) au moins un polyisocyanate; et
(c) au mois un agent d'allongement de chaîne de diol, l'agent d'allongement de chaîne au moins se composant d'un ou plusieurs composés selon la formule :
OH-(CH₂)ₓ-OH
dans laquelle x est égal à 5 ou à un nombre entier de l'ordre de 7 à 30 et dans laquelle au moins un polyisocyanate comprend au moins 95 pour cent en poids de diphénylméthane-4,4'-diisocyanate.

2. Composition élastomère de polyuréthane thermoplastique selon la revendication 1, dans laquelle x et un nombre entier de l'ordre de 8 à 25.

3. Composition élastomère de polyuréthane thermoplastique selon l'une des revendications 1 ou 2, dans laquelle le poids moléculaire moyen du polyol de polyester est de l'ordre de 2.000 à 10.000 ou de 2.500 à 10.000.

4. Composition élastomère de polyuréthane thermoplastique selon l'une des revendications 1 ou 2, dans laquelle x est un nombre entier de l'ordre de 8 à 25 ou de 9 à 20 ou de 9 à 12.

5. Composition élastomère de polyuréthane thermoplastique selon l'une des revendications 1 ou 2 dans laquelle au moins un polyisocyanate comprend au moins 97 pour cent en poids de diphénylméthane-4,4'-diisocyanate.

6. Film de polyuréthane thermoplastique formé à partir de la composition élastomère de polyuréthane thermoplastique selon l'une des revendications 1 à 5.

7. Film élastomère de polyuréthane thermoplastique extrudé formé à partir de la composition élastomère de polyuréthane thermoplastique selon l'une des revendications 1 à 5.
